# EUROPEAN PATENT APPLICATION

(11) **EP 1 491 775 A1**
(43) Date of publication of application: **29.12.2004**
(21) Application number: 03425407.8
(22) Date of filing: 24.06.2003
(51) Int. Cl.: F16B 13/06, F16B 13/02, F16B 13/12, A47K 13/26

(54) **Expanding fixing device, particularly for fixing elements to sanitary fixtures in general**

(71) Applicant: Cavagna & Sipex International S.r.l., 25065 Lumezzane, San Sebastiano,(Brescia) (IT)
(72) Inventor: Cavagna, Livio, 25065 Lumezzane S.S. (IT)
(74) Representative: Modiano, Guido, Dr.-Ing.

(57) **Abstract**

An expanding fixing device, particularly for fixing elements to sanitary fixtures in general, comprising a locking screw (2) that is associable with the element to be fixed (3) and can be inserted in a hole (6) provided in a sanitary fixture (6a). An expansion body (10) and a nut (11) are further provided, and the nut (11) can move upon rotation of the screw (2) and can engage the expansion body (10). The particularity of the invention consists in that the expansion body (10) is constituted by a layer of metallic material (20), which is folded in a substantially cylindrical shape which has a polygonal base in order to form an internal channel for the passage of the screw (2).

## Description

The present invention relates to an expanding fixing element, particularly for fixing elements to sanitary fixtures in general.

As is known, dead holes are currently provided in many ceramic sanitary fixtures to connect accessories to be applied to the fixture, and expanding devices must be used in such holes in order to connect the various elements.

Among known solutions, the one that has provided the best results uses an expansion body made of metallic material, which has a folded plate that forms two opposite wings that engage the expansion nut, which is associated with the screw that passes through a hole provided in the central portion of the plate.

This embodiment is not always capable of providing safe and balanced anchoring inside the hole, and it further requires the provision of the through hole for connection of the screw, with a consequent additional step.

The aim of the invention is to eliminate the drawbacks noted above, by providing an expanding fixing device particularly for fixing elements to sanitary fixtures in general, which allows to provide an expansion force that is distributed within the hole and is such as to obtain a stable anchoring inside the ceramic hole even if the hole has imperfections or deformations.

Within this aim, an object of the invention is to provide a fastening device in which it is not necessary to provide the screw passage hole and in which the expansion body can be easily coupled rotationally to the expansion nut.

Another object of the present invention is to provide a fastening device the manufacture whereof is extremely simplified who yet allows to obtain a product that is particularly valid from a strictly structural standpoint.

Another object of the present invention is to provide a fastening device that thanks to its particular constructive characteristics is capable of giving the greatest assurances of reliability and safety in use and is further competitive from a merely economical standpoint.

This aim and these and other objects that will become better apparent hereinafter are achieved by an expanding fixing device, particularly for fixing elements to sanitary fixtures in general, which comprises a locking screw that is associable with the element to be fixed and can be inserted in a hole provided in a sanitary fixture, an expansion body and a nut being further provided, said nut being movable upon rotation of said screw and engageable with said expansion body, characterized in that said expansion body is constituted by a layer of metallic material, which is folded in a substantially cylindrical shape which has a polygonal base in order to form an internal channel for the passage of said screw.

Further characteristics and advantages of the invention will become better apparent from the description of a preferred but not exclusive embodiment of an expanding fixing device, particularly for fixing elements to sanitary fixtures in general, illustrated by way of non-limitative example in the accompanying drawings, wherein:

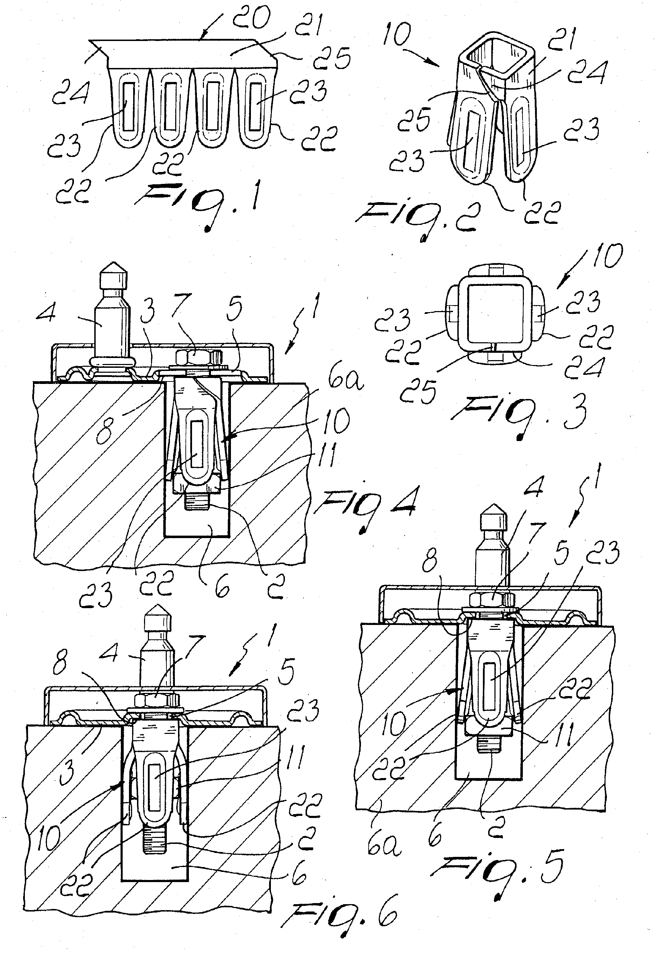

Figure 1 is a schematic view of the metallic layer for providing the expansion body, extended flat;
Figure 2 is a schematic perspective view of the expansion body after production;
Figure 3 is a plan view of the expansion body;
Figures 4 and 5 are sectional views, taken along two perpendicular planes, of the fixing device inserted in the hole of a sanitary fixture;
Figure 6 is a view of the step for expansion with stable connection to the sanitary fixture.

With reference to the figures, the expanding fixing device particularly for fixing elements to sanitary fixtures in general, generally designated by the reference numeral 1, comprises a locking screw 2, which is connected to the element to be fixed to a sanitary fixture and can be constituted by a plate 3 from which a pin 4 for fixing the seat or the like protrudes. The plate 3 typically has a slot 5 within which the screw can be arranged in various manners depending on the position that one wishes to give to the pin 4.

The pin 4, which can be of any type and shaped in any manner, can be provided for example monolithically with the screw 2 if it is not necessary to perform center distance adjustments.

The screw 2, in the specific example, is provided with a head 7, but it is obviously possible to use any shape that allows to turn the screw by means of a conventional tool.

The screw lies inside an expansion body, generally designated by the reference numeral 10, which engages a nut 11 that can move when the screw turns and is used to actuate the expansion body 10 so that it expands.

The particular feature of the invention is constituted by the fact that the expansion body 10 is provided by means of a layer of metallic material, generally designated by the reference numeral 20, which has a border 21 from which wings 22 protrude, each wing being provided with a central recessed portion 23 formed by drawing, which provide a shimming of the assembly.

The border 21 has a protruding tab 24 at one end and a complementarily shaped recess 25 at the opposite end.

A particularity of the invention is constituted by the fact that said layer 20 made of metallic material is folded so as to assume a substantially cylindrical shape with a polygonal base, so as to form an internal channel for the passage of the screw 2.

In the specific example, the metallic layer is folded so as to form a square base, in which each side corresponds in practice to the regions where the wings 22 are provided.

It should also be noted that the expansion body having a polygonal base has a number of sides that corresponds to the number of sides of the expansion nut 11, so that each wing 22 engages a corresponding side of the expansion nut 11.

The use of a polygonal base, and particularly of a square base, allows to easily provide means for preventing the rotation of the expansion body simply by using the recess 8 formed at the region for connection to the plate 3, since the slot 5 is normally formed in a recessed region that is indeed constituted by the recess 8.

In order to connect the fixing device, if one wishes to connect a pin with universal coupling, it is sufficient to insert the expansion body 10, which is applied to the plate 3, in the hole 6 formed in the sanitary fixture 6a, then the screw 2 is turned by acting on its head 7, producing the consequent translational motion of the nut 11 which, by engaging the recesses 23 of the wings 22 causes their radial opening with consequent stable locking and fixing inside the hole 6.

The solution described above allows to have a uniformly distributed circumferential locking, capable of providing a particularly valid action.

Moreover, it is noted that the element 20 is obtained simply by bending without having to resort to hole forming operations.

The invention thus conceived is susceptible of numerous modifications and variations, all of which are within the scope of the appended claims.

All the details may further be replaced with other technically equivalent elements.

In practice, the materials used, as well as the contingent shapes and dimensions, may be any according to requirements.

Where technical features mentioned in any claim are followed by reference signs, those reference signs have been included for the sole purpose of increasing the intelligibility of the claims and accordingly such reference signs do not have any limiting effect on the interpretation of each element identified by way of example by such reference signs.

## Claims

1. An expanding fixing device, particularly for fixing elements to sanitary fixtures in general, comprising a locking screw (2) that is associable with the element to be fixed (3) and can be inserted in a hole (6) provided in a sanitary fixture (6a), an expansion body (10) and a nut (11) being further provided, said nut (11) being movable upon rotation of said screw (2) and engageable with said expansion body (10), **characterized in that** said expansion body (10) is constituted by a layer of metallic material (20), which is folded in a substantially cylindrical shape which has a polygonal base in order to form an internal channel for the passage of said screw (2).

2. The fixing device according to claim 1, **characterized in that** said layer of metallic material (20) has a border (21) from which wings (22) protrude substantially at right angles with respect to said border (21).

3. The fixing device according to one or more of the preceding claims, **characterized in that** it comprises a central recess (23) formed by drawing at each one of said wings (22).

4. The fixing device according to one or more of the preceding claims, **characterized in that** said border (21) has a protruding tab (24) at one end and, at the opposite end, a recess (25) that is shaped substantially complementarily to said tab (24).

5. The fixing device according to one or more of the preceding claims, **characterized in that** said expansion body (10) having a polygonal base comprises one of said wings (22) at each side.

6. The fixing device according to one or more of the preceding claims, **characterized in that** said expansion body (10) having a polygonal base has a number of sides equal to the number of sides of said expansion nut (11).

7. The fixing device according to one or more of the preceding claims, **characterized in that** said expansion body (10) has a substantially square base.

8. The fixing device according to one or more of the preceding claims, **characterized in that** said expansion body (10) having a square base engages, in order to prevent rotation during actuation with said screw (2), a recess (8) formed correspondingly in said element to be fixed (3).
